# EUROPEAN PATENT APPLICATION

(11) **EP 2 727 847 A1**
(43) Date of publication of application: **07.05.2014**
(21) Application number: 12190966.7
(22) Date of filing: 01.11.2012
(51) Int. Cl.: B65B 9/02

(54) **A process for the manufacture of a sachet with at least 2 compartments**

(71) Applicant: Unilever N.V., 3013 AL Rotterdam (NL)
(72) Inventor: Dagaonkar, Manoj Vilas, Whitefield, Bangalore (IN); Mahapatra, Samiran, Whitefield, Bangalore (IN); Tendulkar, Mahesh Subhash, Whitefield, Bangalore (IN); Jambekar, Girish Umakant, Andheri East, Mumbai 400 099 (IN)
(74) Representative: Rosen Jacobson, Frans Lucas M.

(57) **Abstract**

The invention relates to a process for the manufacture of dual compartment sachets for packing two materials used as compositions for purification of water where the weldable materials are chosen to prevent interaction of materials stored in the two compartments and also interaction with outside atmosphere. Water purification compositions packed in these sachets are especially useful for removal of microorganisms like bacteria, viruses and cysts to make the water suitable for human consumption. The invention particularly relates to a form, fill and seal process for the manufacture of a sachet comprising at least two compartments where the weldable materials used for forming the outer walls and the inner partition layer are chosen to prevent interaction of materials stored in the compartments and also interaction with outside atmosphere.

## Description

### Field of the invention

The present invention relates to a process for the manufacture of a sachet comprising at least two compartments for packing two or more materials. It is particularly used for packing compositions for purification of water. Water purification compositions packed in these sachets are especially useful for removal of microorganisms like bacteria, viruses and cysts and chemical contaminants like arsenic to make the water suitable for human consumption. The invention particularly relates to a process for the manufacture of a sachet comprising at least two compartments where the weldable materials used for forming the outer walls and the inner partition layer are chosen to prevent interaction of materials stored in the compartments and also interaction with outside atmosphere.

The invention has been developed primarily for use in drinking water application and will be described hereinafter with reference to this application. However, it will be appreciated that the invention is not limited to this particular field of use.

### Background of the invention

Any discussion of the prior art throughout the specification should in no way be considered as an admission that such prior art is widely known or forms part of the common general knowledge in the field.

A large population of people in the world live in developing and under-developed countries where there is a severe shortage of hygienic potable water. A high percentage of these people live in rural areas where there are no water purification systems like the ones provided by urban municipal drinking water treatment plants. Many people have to depend directly on ground and/or underground water sources like wells, tube-wells, ponds and rivers. Often these water sources are contaminated by sewage, industrial and agricultural wastes.

A large number of physical and chemical methods of purifying water have been known and used at municipal, local and domestic levels. The chemical purification methods include use of chemicals including coagulants and flocculants to precipitate the suspended and dissolved impurities and biocides for killing microorganisms.

EP1980538 (Unilever, 2008), discloses flocculation and disinfection mix being mutually incompatible, need to be segregated from each other. Sachets were manufactured by form-fill-seal process to form a co-sachet, designed to pack the flocculation mix and disinfection mix side by side and useful for dispensing contents of the sachet sequentially. It also discloses packing small quantities of solid chlorine disinfectant in a stable condition for a long period of time. These sachets had to be cut open from one end to other and only in a particular direction in order that ingredients from both compartments were dispensed simultaneously to water. Even if the sachet was cut open from one end to the other the ingredients from both the compartments would be dispensed only in one direction whereas opening in the other direction would enable dispensing of material from only one compartment. One of the risks in this was during usage, either disinfection mix or flocculation mix would be added to water and the resulting water may not be microbiologically safe to drink. This does not disclose a solution to the problem of packing two ingredients in very small quantities and maintaining them from interacting with each other and also with the atmosphere while ensuring that the ingredients can be dispensed simultaneously in one operation irrespective of the direction in which the sachet is cut open as they are positioned side by side.

US2401110 (Howard, A., 1946), discloses a bag formed of laminate material to form two compartments for having segregated ingredients and filling of one compartment does not affect filling of second. A single cut dispenses ingredients of both compartments. However, the method of manufacture described is that one compartment is filled and sealed, then inverted and the second compartment is filled and sealed. In doing it this way, two seals are responsible for sachet performance, product safety as it is based on sealing of two edges. This is a bag as the title indicates for packing large volumes of material such as soups, noodles etc. Although there is mention of segregating the two materials in the two compartments it does not address the problem of packing very small quantities of material and the interaction of the two materials and how to maintain them from interacting with each other or with the external atmosphere during storage and before use.

The present inventors have developed a process for manufacturing sachets to pack the ingredients of water purification composition such as flocculation and disinfection ingredients in two compartments that are positioned in a super imposable front and back manner with a laminate as a partition layer. In this design, even if the sachet is cut open from any one side, ingredients from both the compartments are dispensed together into water and the process for manufacture of the sachet is by a simple process involving formation of the two compartments followed by filling of the materials in one operation. These sachets are made by selecting specific weldable materials by using a form, fill and seal process. The weldable materials comprise a flexible laminate comprising at least three layers selected from polymeric and aluminium foil layers to ensure minimum interaction among the contents of the sachet and also with the external atmosphere. It was also found preferable to design the dosing pipe such that the sachet was filled uniformly and the injected material did not interfere with the sealing operation. The inventors have also designed the dosing mechanism to ensure simultaneous filling of two different quantities of two different materials into the compartments of the sachet.

The object of the present invention is to provide a form, fill and seal process for the manufacture of sachets comprising at least two compartments for packing very small quantities of materials.

Another object of the present invention is to provide a form, fill and seal process for manufacture of sachets comprising at least two compartments for packing very small quantities of two compositions comprising coagulation and disinfection ingredients, respectively for water purification.

Another object of the present invention is to provide a process for manufacture of sachets comprising at least two compartments that can be cut open from any one side and dispense ingredients from both the compartments simultaneously into water. Another object of the present invention is to select laminates forming the sachet to ensure minimum interaction among the contents of the sachet and also with the external atmosphere.

### Summary of the invention

According to the present invention there is provided a process for the manufacture of a sachet comprising at least two compartments in a form, fill and seal machine, said sachets manufactured by a process comprising:
i. spooling outer weldable material and inner partition weldable material into a sealing element wherein the wedable materials are flexible;
ii. sealing the weldable materials in the longitudinal direction such that the innermost surfaces of the outer weldable materials are bonded to the inner partition weldable material to form at least two tubes superimposed on each other;
iii. sealing said tubes along a lateral direction to form at least two compartments;
iv. injecting measured quantities of materials into the compartments;
v. providing the tubes a second lateral seal to form a sachet with at least two compartments;
wherein the outer weldable material comprises a laminate having a thickness of at least 60 µm and comprising at least three layers selected from polymeric and aluminium foil layers.

The features and advantages of the invention will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples, embodiment and figures given in the description below are intended to clarify the invention and are not intended to limit the invention to those examples per se.

### Detailed description of the invention

The present invention relates to a process for the manufacture of sachets comprising at least two compartments using a form, fill, seal machine and preferably for packing materials used in compositions for purification of water where the weldable materials are chosen to prevent interaction of materials stored in the two compartments and also interaction with external atmosphere. The process for the manufacture of the sachets according to the invention can be used for making sachets with two or more number of compartments. Depending on the number of compartments required, the number of weldable materials used can be varied and the sealing mechanisms can also be selected appropriately.

The process for making sachets comprising at least two compartments comprises the feeding of three separate weldable materials. Preferably the weldable materials from a first and second roll form the outer walls of the sachet and the weldable material from a third roll forms the inner partition for the sachet. The three weldable materials are completely peripherally sealed thereby forming the two compartments. The inner partition layer is preferably chosen such that it has substantially uniform strength on those parts of its surfaces which contact the two compartments.

In this embodiment, the flexible walled compartments may have the appearance of the two individual compartments or sachets linked "back to back", with a single wall (i.e. the inner partition layer of the material) between the compartments providing the contained volumes of the two sachets. The inner partition layer preferably has uniform rupture strength of those parts of its surfaces which contact the two compartments; that is it preferably does not have any weakness on these parts of the surface which may facilitate failure and mixing of the contents of the two compartments before the sachet is opened.

Preferably, the sachet is generally square or rectangular in shape, although other shapes may be contemplated.

The sachet of the invention is preferably suitable for use with any two component compositions which requires that the two components of the composition are to be kept separate until use.

The process for the manufacture of a sachet comprising at least two compartments in a form, fill and seal machine, said sachets manufactured by a process comprising:
i. spooling outer weldable material and inner partition weldable material into a sealing element wherein the weldable materials are flexible;
ii. sealing the weldable materials in the longitudinal direction such that the innermost surfaces of the outer weldable materials are bonded to the inner partition weldable material to form at least two tubes superimposed on each other;
iii. sealing said tubes along a lateral direction to form at least two compartments;
iv. injecting measured quantities of materials into the compartments;
v. providing the tubes a second lateral seal to form a sachet with at least two compartments;
wherein the outer weldable material comprises a laminate having a thickness of at least 60 µm and comprising at least three layers selected from polymeric and aluminium foil layers.

It is preferred that the process to manufacture a sachet according to the invention is used to obtain a series of sachets in continuous fashion. The sachets may be manufactured in a single lane or a there may be a plurality of lanes. It is preferable to provide perforations on the transverse wall if it is a single lane and on both transverse and longitudinal walls if it is in the form of a plurality of lanes for easy separation of the sachets as required.

### Weldable materials:

All the weldable materials are flexible; preferably the desired flexibility may be that which facilitates easy and simultaneous dispensing of the components from both compartments. The weldable materials are preferably made of plastic or polymeric material; the plastic materials may contain one or more layers of thermoplastic materials. Preferably, all the layers of the material are such that they are readily tearable, so that in use, one end or part of one end of the sachet may readily be torn off, and both compositions may be dispensed together.

Suitable weldable materials comprise non-polar thermoplastic resins, polyolefin resins, for example polymer containing units derived from at least one of ethylene, propylene, butylenes, styrene, benzene and octane. The non-polar resin may also comprise a compound of one or more polymers, including polyethylene, polypropylene, ethylene/propylene copolymers, ethylene/propylene/butylenes terpolymers and polyethylene terephthalate. Polyethylene can be low/medium/high density polyethylene or a combination of two or more densities and can be a monolayer or a combination of two or more layers which may be suitably bonded by adhesive or extrusion or any other means so as to provide the required mechanical strength to contain the sachet ingredients and prevent the interaction of the components with external environment and between compartments by any known means of physical or chemical interaction.

The weldable materials used to form the sachet are film or sheet materials, and comprise a layer or a combination of layers preferably having moisture and chlorine barrier properties. The moisture barrier is preferably provided by a layer of aluminium foil, preferably having a thickness in the range 7 - 20 µm and chlorine barrier is preferably provided by a layer of polyethylene preferably having a thickness in the range 10 - 100 µm. Preferably, the Aluminium foil is positioned as a layer within the weldable material which is bonded with at least one polymeric layer on its outer layers to prevent reaction of the aluminium with other possibly reactive components of the composition. Preferably, the polymeric layer can be Polyethylene Terephthalate or a combination of Polyethylene and Polyethylene terephthalate. The aluminium layer may also be coated with a layer of primer. Polymeric layers used for bonding may be monolayer of a single material or a combination of two or more layers of same or different materials which may be suitably bonded by adhesive or extrusion or any other means so as to provide the required mechanical strength to contain the sachet ingredients and prevent the interaction of the components by any known means of physical or chemical interaction.

It is preferred that the peripheral seals of the compartment be heat-sealed. Preferably both of the outer surfaces of the partition layer and the inner surfaces of the outer layers adjacent to the partition layer should be heat sealable. However, other methods of sealing, including ultrasonic sealing and high frequency sealing, which are known to those skilled in the art, can be used.

In addition, it is preferred for ease of manufacture that the outer surfaces of the outer layer materials not in contact with the partition layer material are not heat sealable or are not sealable by any other means. Preferably the outer layer of the outer sheet material may comprise for example, a layer of polyester, polyethylene terephthalate or oriented polypropylene. This layer can be a monolayer of single material or a combination of two or more layers of same or different materials which may be suitably bonded by adhesive or extrusion or any other means so as to provide the required mechanical strength to contain the sachet ingredients and prevent the interaction of the components by any known means of physical or chemical interaction.

The thickness of each of the weldable material is selected to be at least 60 µm and preferably in the range 100 to 800 µm, and more preferably is 100 to 200 µm.

Particularly, preferred materials for manufacturing the compartments according to the invention is a material forming the outer weldable material having at least three layer structure and preferably four layer structure where the aluminium foil layer is provided with a polyethylene terephthalate layer on either side with a polyethylene layer forming the layer on the inside of the sachet. The aluminium foil layer preferably has a thickness in the range 7-20 µm, the polyethylene terephthalate layer has a thickness in the range 10-100 µm and the polyethylene layer has a thickness in the range 10-100 µm.

The weldable material for the inner partition layer is preferably a three layer structure where the aluminium foil layer is covered with polyethylene layer on either side. The aluminium foil layer preferably has a thickness in the range 7-20 µm, and the polyethylene layer preferably has a thickness in the range 10-100 µm.

Both of these weldable materials provide enough moisture and chlorine barrier properties. The width of the seal between the layers is preferably 2 mm to 15 mm, and more preferably, 4 to 8 mm. Conveniently, the compartments produced according to the invention will have dimensions of 20 to 100 mm wide, a length of 40 mm to 160 mm.

### Water purification composition:

The water purification composition comprises a disinfection ingredient and a coagulating agent. The disinfection ingredient optionally is combined with a buffering agent to form a disinfection composition and the disinfection ingredient is preferably a halogen compound and more preferably a chlorine compound. The buffering agent is preferably a carbonate, bicarbonate or oxide of sodium or calcium. The disinfection ingredient and a coagulating agent are kept separate in the two compartments.

The coagulating agent is preferably combined with a flocculating agent and an adsorbent clay to form a flocculation composition. The coagulating agent is preferably a water soluble salt of a trivalent inorganic metal and the flocculating agent when present is preferably a high molecular weight water soluble polymer.

Preferably the disinfection ingredient in the disinfection composition is in the range from 10-95% by weight, more preferably 20-80% by weight and most preferably 50-70% by weight and the buffering agent if present is added to make the composition 100% by weight. The weight of the disinfection composition packed in the sachet is preferably in the range 0.05 to 1 gram. The weight of the disinfection composition packed in the sachet can be different depending on the disinfection ingredient chosen, its molecular weight and its available chlorine.

The coagulating agent is a compound which is a water-soluble inorganic metal salt having trivalent cation. Suitable trivalent cations are Al³⁺ and Fe³⁺. The coagulant is generally free from carbon atoms. Examples of coagulating agents are ferric sulphate, aluminium sulphate and Polyaluminium chloride. The coagulating agent is preferably present in an amount in the range of from 5 to 80%, more preferably from 10 to 50% by weight of the flocculation composition.

The flocculating agent in the flocculation composition of this invention is a preferably a compound which is a high molecular weight water soluble polymer. Examples of flocculating agents are polysaccharides (dextane celluloses), proteins, modified celluloses (hydroxyethyl/hydroxypropyl or carboxymethyl), and polyacrylamides preferably high molecular weight polyacrylamide. It is especially preferred that the polyacrylamide is either anionic or non-ionically modified, more preferably anionically modified. Suitable molecular weights of these polyacrylamides are in the range of 10⁵ to 10⁷. Preferred flocculating agent is Superfloc (from Cytec). Preferred amounts of the flocculating agent is from 0.5 to 15%, more preferably from 1 to 10% and most preferably from 2 to 8% by weight of the flocculation composition.

The adsorbent clay in the flocculation composition is preferably from a selection of those clays which are capable of adsorbing high levels of water and organic or inorganic compounds. Examples of clay which may be included are Montmorillonite clay (dioctheydral smectite clay), Laponite, Hectorite, Nontronite, Saponite, Volkonsite, Sauconite, Beidellite, Allevarlite, Illite, Halloysite, Attapulgite, Mordenite, Kaolines, and Bentonite. A highly preferred clay as per this invention is Bentonite clay. When included, the adsorbent clay is present in an amount in the range of 5 to 75%, more preferably from about 10 to 60% by weight of the flocculation composition.

The flocculation composition preferably comprises a quencher which is capable of reacting with chlorine thereby making the water suitable for human consumption. Suitable quenchers are sodium thiosulphate or ascorbic acid. The quencher is preferably present in an amount in the range of 1 to 20%, more preferably from about 2 to 12% by weight of the flocculation composition. The kinetics of release of quencher can be controlled by coating the quencher with a layer of a suitable inorganic material. The inorganic material can be magnesium hydroxide.

The flocculation composition is preferably present in the sachet in amounts in the range of 0.5 to 10 gram more preferably in the range of 1 to 5 gram.

The particle size of the disinfection composition and the flocculation composition is preferably selected to be in the range of 300-1200 µm as below 300 µm does not have ideal flow for packing by the process of the present invention.

### Form, fill, seal Machine:

Form, Fill, Seal (FFS) machines are commonly used for making sachets containing liquid or powder formulations and generally are in vertical or horizontal architecture based on their mechanical assembly. The machine essentially consists of mechanical arrangements for spooling at least one flexible weldable material, sealing the longitudinal end of the weldable material to form an oval-shaped tube and sealing a lateral side of the tube to form a single compartment. The material is dosed from a single hopper into the compartment followed by the other lateral sealing to form a sachet. The limitations of the conventional machine are that it cannot be used to pack more than one composition and form a multi-compartment sachet.

Significant mechanical modification to a standard vertical FFS machine was made to adopt it use in the present invention. The machine's spooling design was modified to accommodate at least three weldable materials. The forming and sealing element was also modified to form a tube comprising at least two compartments for the sachet. Dosing assembly was modified to accommodate two hoppers and two separate dosing mechanisms were provided to dose two separate materials into the two compartment sachet.

### Method of Injecting Materials:

The material injecting assembly comprises of two primary hoppers and each hopper holds one type of the material that is desired to be packed in one of the two compartments of the sachet. From each of the primary hoppers the materials are dispensed into the concentrically positioned die cups. The die cups in each concentric circle preferably are of one particular size and receive only one type of material. Preferably any excess material over the die cups is scrapped off by a scraping assembly. Preferably the flapper plates at the bottom of the die cups open and dispense the material into a secondary hopper from which the material enters the dosing pipe. It is also possible that the material from the die cups are directly introduced into the dosing pipes. The dosing pipe guides the material into the respective compartment of the sachet. The end of the dosing pipe is preferably flattened to allow the dispensed material to spread at the bottom of the sachet so as to avoid the seal contamination.

### Sealing Process:

Sealing of the longitudinal as well as the lateral edges of the sachet is preferably achieved by any method that imparts heat to the weldable materials. Preferably such a method may include the thermal heating process or an ultrasound method or vibration method or any other suitable method for sealing multiple edges. The thermal heating can preferably be achieved by set of pneumatically operated jaw type sealer or mechanically operated two counter rotating rollers. The sealing process includes bringing the weldable materials in the vicinity of the sealing elements and effecting the sealing of the edges.

The sachet can be cut open from any one sealed side or even a portion of the side of the sachet and the contents from both the compartments can be dispensed simultaneously.

According to another aspect of the invention there is provided a method of purification of water comprising the steps of:
a) Single cut opening of the sachet made by a process as claimed in claim 1;
b) mixing of injected materials with water;
c) allowing the suspended particles to settle down;
d) separating the supernatant from the settled suspended particles.

### Brief Description of the drawings

Figure 1: Shows the process of making the sachet with two compartments.
Figure 2: Shows another configuration of the process of making the sachet with two compartments.
Figure 3: Shows opened sachet formed using the process as shown in figure 1 or figure 2
Figure 4: Shows the cross sectional view of the measuring device
Figure 5: Shows the top view of the measuring device

### Detailed description of the drawings

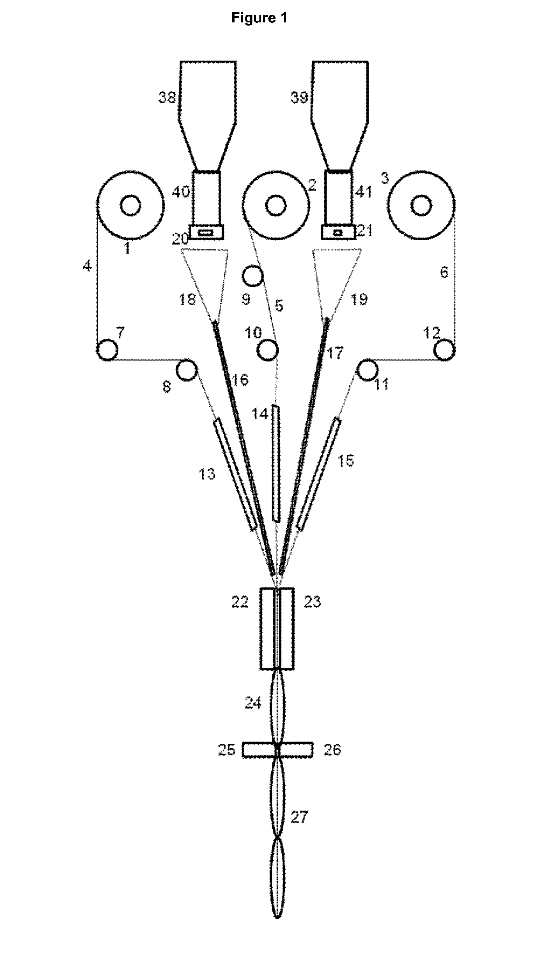

Figure 1 show rolls (1), (2) and (3), of the first, second and third weldable materials respectively from which the weldable materials (4) and (6) form the two outer walls of the sachet and weldable material (5) forms the inner partition layer of the sachet. Idler rollers (7), (8), (9), (10), (11) and (12) are used to adjust the tension of the weldable materials. The three weldable materials are guided into the jaws of the sealing elements (22) and (23) through a set of guides (13), (14) and (15). The sealing elements (22) and (23) seal the longitudinal boundaries of the three weldable materials (4), (5) and (6) to form two superimposed continuous tubes (24). The two superimposed tubes then pass through a pair of sealing element (25) and (26) for effecting a horizontal seal to form two distinct compartments. The two materials from the primary hoppers (38) and (39) are fed to the measuring systems (20) and (21) through the two pipes (40) and (41). The material is measured gravimetrically or volumetrically by measuring systems (20) and (21) and then dispensed into the two secondary hoppers (18) and (19) which are then guided into the two separate compartments through two dosing pipes (16) and (17). The ends of the dosing pipes (16) and (17) have a flattened outlet to facilitate the spreading of the material inside the sachet uniformly in the direction perpendicular to the filling line. The filled sachet now advances and is further sealed horizontally by the sealing elements (25) and (26) to effect the second horizontal seal. This completes the forming, filling and sealing of a two compartment sachet (27).

The measuring systems (20) and (21) mentioned above could be any system or a combination of systems that is capable of measuring, either gravimetrically or volumetrically, the required amount of material to be dosed into the respective compartment of the sachet.

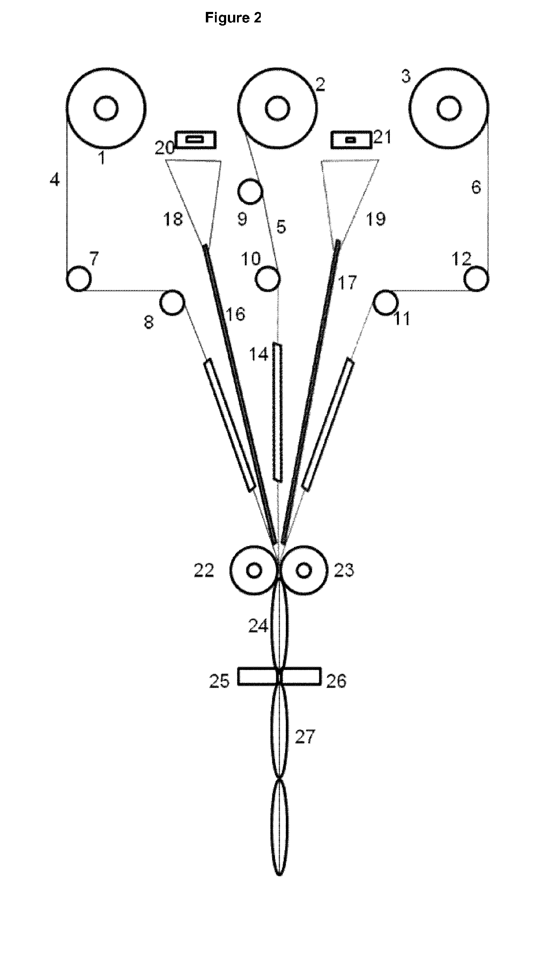

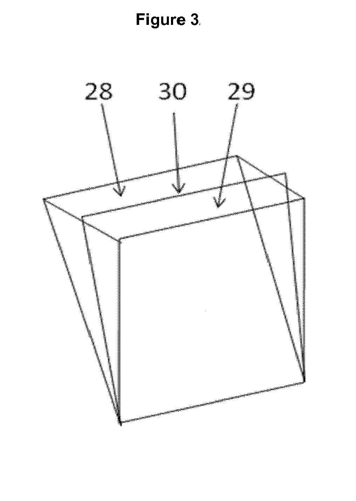

Figure 2 shows yet another configuration for the claimed invention. Rolls (1), (2) and (3), of the first, second and third weldable materials respectively from which the weldable materials (4) and (6) form the two outer walls of the sachet and weldable material (5) forms the inner partition layer of the sachet. Idler rollers (7), (8), (9), (10), (11) and (12) are used to adjust the tension of the weldable materials. The three weldable materials are guided into the nip of the counter-rotating sealing elements (22) and (23) through a set of guides (13), (14) and (15). The sealing elements (22) and (23) seal the longitudinal boundaries of the three weldable materials (4), (5) and (6) to form two superimposed continuous tubes (24). The two superimposed tubes then pass through a pair of sealing element (25) and (26) for effecting a horizontal seal to form two distinct compartments. The two materials are received in the primary hopper (not shown in the figure) which are measured gravimetrically or volumetrically by measuring systems (20) and (21) and then dispensed into the two secondary hoppers (18) and (19) which are then guided into the two separate compartments of the tube (24) through two dosing pipes (16) and (17). The end of the dosing pipes (16) and (17) has a flattened outlet end to facilitate the spreading of the material inside the sachet uniformly in the direction perpendicular to the filling line. The filled sachet now advances and is further sealed horizontally by the sealing elements (25) and (26) to effect the second horizontal seal. This completes the forming, filling and sealing of a two compartment sachet (27). The opened sachet formed using the process as mentioned in figure 1 or figure 2 is shown in figure 3 where (28) and (29) are the two compartments and (30) is the inner partition layer.

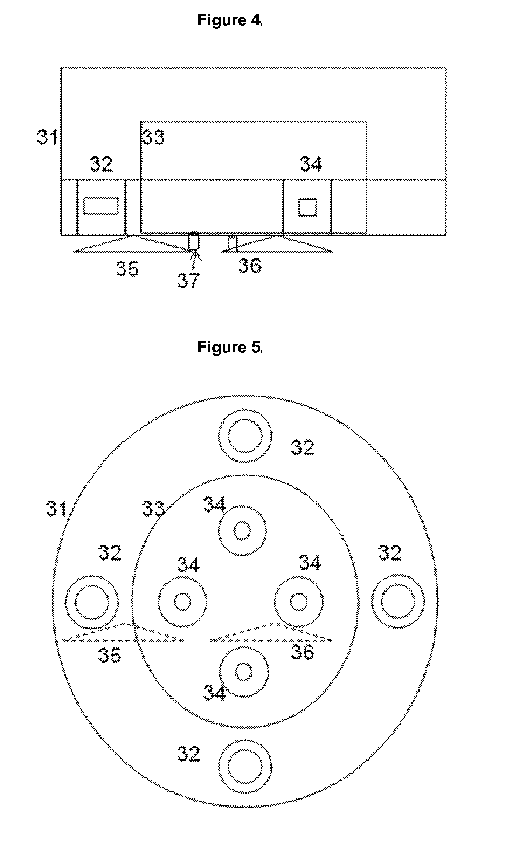

An example of a volumetric system is shown in Figure 4. Figure 5 shows a concentric plate assembly (31) and (33) with concentric array of circular plates (32) and (34). The circular plates (32) and (34) have an opening which corresponds to the amount of material to be dosed into the two compartments. The flapper plate mechanism (35), (36) opens and closes the openings of (32) and (34) at the exact time of dosing. This timing of opening and closing is controlled by the position of the shaft (37) which controls the flapper plates (35) and (36). This mechanism is accurately timed to avoid any seal contamination of sachet. An additional mechanism (not shown in the figure) may also include, if required, a surface for scraping excessive material followed by the conveying or directing mechanism such as tube or pipe or a chute.

### Examples

### Example 1

### Demonstration of uniformity in packing:

The sachets formed by the process described in figure 1 were packed with 0.43g of disinfection composition in one of the two compartments and 2g of flocculation composition in the other compartment. The sachets were opened and the contents were transferred individually after ensuring sealing of one of the compartments while removing the contents of the other to avoid any mixing. The contents were then weighed using a sensitive balance and the weights were recorded. This was repeated for randomly selected sachets and the weights are tabulated in table 1 below.

**Table 1**

| **Sr. No.** | **Disinfection Composition (g)** | **Flocculation Composition (g)** |
|---|---|---|
| 1 | 0.433 | 2.079 |
| 2 | 0.440 | 2.051 |
| 3 | 0.438 | 2.074 |
| 4 | 0.436 | 2.079 |
| 5 | 0.435 | 2.078 |
| 6 | 0.436 | 2.069 |
| 7 | 0.439 | 2.057 |
| 8 | 0.439 | 2.056 |
| 9 | 0.440 | 2.091 |
| 10 | 0.440 | 2.077 |
| **Average** | **0.438** | **2.070** |

The data presented in table 1 show that the weights of the materials retrieved from the compartments having the flocculation and disinfection compositions were uniform which shows that the dosing mechanism according to the invention is effective in injecting the appropriate and correct amounts of the flocculation and disinfection compositions into the respective compartments of the sachet.

### Example 2

### Demonstration of chlorine availability:

The available chlorine from 0.23g of calcium hypochlorite in 10L of deionised water is 14.4ppm. The sachets were formed using the outer weldable material of 110 µm, having four layers comprising polyethylene terephthalate -Aluminium foil- polyethylene terephthalate-polyethylene. The sachets were manufactured by the process according to the invention by packing the flocculation composition in one compartment and the disinfection composition in the other. These sachets were individually opened and checked for uniformity with respect to chlorine content which indicates stability of the material packed in the sachet. Any one edge of the said sachets was cut opened by scissors and only the contents of the disinfection composition comprising 0.23g of calcium hypochlorite was mixed in 10L deionised water and the available chlorine in water was estimated by iodometric titration of the water sample with sodium thiosulfate solution. The experiment was conducted using freshly manufactured sachets and after storage in hot and humid conditions i.e. temperature 40°C and relative humidity of 85% for 6 months. The measurement of available chlorine in the disinfection composition was repeated for randomly chosen sachets and the available chlorine values are tabulated in Table 2 below. The values show that the chlorine levels are maintained on par with the initial level even after storing the sachets under hot and humid conditions for 6 months. This shows that the weldable material chosen according to the invention is effective in protecting the disinfection composition and prevents interaction with the flocculation composition present in the other compartment as well as the external atmosphere even after storage under hot and humid conditions for 6 months.

**Table 2**

| **Sr. no.** | **Available chlorine (ppm) in freshly manufactured sachets** | **Available chlorine (ppm) after storage for 6 months in hot and humid conditions** |
|---|---|---|
| 1 | 14.4 | 13.0 |
| 2 | 13.8 | 13.1 |
| 3 | 15.2 | 15.0 |
| 4 | 14.4 | 14.7 |
| 5 | 14.1 | 13.3 |

### Example 3

### The selection of the weldable material:

The sachets were formed using the outer weldable material of thickness less than 60 µm, having three layers comprising 10 µm of polyethylene terephthalate - 9 µm Aluminium foil - 38 µm polyethylene. The sachets were manufactured by the process according to the invention.

This structure was not found feasible to pack the formulation due to the following reasons.
1. The three layered weldable material tore off easily and was damaged as the weldable material thickness was less than 60 µm, which was lower than the thickness selected according to the invention.
2. When the three layered weldable material with thickness less than 60 µm, was used, it was observed that the weldable material got abused due to crumpling that resulted in foil cracking as it was not able to withstand the mechanical stress given by the machine.
3. The crumpling of sachet led to micro cracks in the aluminium foil leading to moisture ingress with time. This moisture reacted with the ingredients and caused chlorine degradation. Consequently, these sachets failed when tested for microbial efficacy as there was less chlorine available for microbial action. Hence microbial kill efficacy of a formulation packed in a three layer weldable material having a thickness less than 60 µm was poor.

A sachet made with four layer weldable material or a three layer weldable material having a thickness of 60 µm or more did not have the above mentioned negatives.

### Example 4:

### Demonstration of removal of microbial contamination from water:

The sachets formed by the process described in figure 1 were filled with a flocculation composition comprising 1g of Polyaluminium chloride in one of the compartments and the disinfection composition comprising 0.23g of calcium hypochlorite in the other compartment. The contents of the sachet were added to 10 Litres of water having initial TDS of - 600 ppm and pH = 7.6 and spiked with bacteria, viruses and Cysts at levels indicated as input log in the table 3, stirred and the suspended materials were allowed to settle. The supernatant water that was separated from the suspended material was tested for bacteria, viruses and cyst removal from the water by measuring the residual log. Methods to measure micro-organisms/surrogates are using the method described in detail in the publication "Tropical Medicine and International Health", Volume 11 no. 9 pp 1399-1405 September 2006, in article titled "Microbiological performance of a water treatment unit designed for household use in developing countries", by Thomas Clasen, Suresh Nadakatti and Shashikala Menon.

The table 3 below shows that the removal of bacteria, viruses and cysts was higher than 6, 4, 3 log reduction respectively indicating that the sachets formed by the claimed process were effective in achieving the desired microbiological kill.

**Table 3**

| Experiment | Bacteria | | Virus | | Cyst | |
|---|---|---|---|---|---|---|
| | Input log | log removal | Input log | log removal | Input log | log removal |
| Experiment 1 | 8.45 | 8.45 | 6.9 | 6.9 | 4.55 | 4.55 |
| Experiment 2 | 7.26 | 7.26 | 5.43 | 5.43 | 4.21 | 4.21 |

## Claims

1. A process for the manufacture of a sachet comprising at least two compartments in a form, fill and seal machine, said sachet manufactured by a process comprising:
i. spooling outer weldable material and inner partition weldable material into a sealing element wherein the weldable materials are flexible;
ii. sealing the weldable materials in the longitudinal direction such that the innermost surfaces of the outer weldable materials are bonded to the inner partition weldable material to form at least two tubes superimposed on each other;
iii. sealing said tubes along a lateral direction to form at least two compartments;
iv. injecting measured quantities of materials into the compartments;
v. providing the tubes a second lateral seal to form a sachet with at least two compartments;
wherein the outer weldable material comprises a laminate having a thickness of at least 60 µm and comprising at least three layers selected from polymeric and aluminium foil layers.

2. A process as claimed in claim 1, wherein the thickness of the outer weldable material is in the range 100 to 800 µm.

3. A process as claimed in claims 1 or 2, wherein the injected materials in the two compartments are incompatible with each other.

4. A process as claimed in claim 3, wherein injected material in one compartment comprises materials selected from coagulating agent and the material in the other compartment comprises a disinfection ingredient that are together suitable for purification of water.

5. A process as claimed in any one of claims 1 to 4 wherein injecting measured quantities of materials is through a dosing pipe which has a flattened outlet.

6. A process as claimed in any one of claims 1 to 5 wherein materials from at least two hoppers is fed into individual die cups which in turn is fed to two dosing pipes.

7. A process as claimed in claim 5 or 6 wherein the die cups are concentrically arranged on a rotatable table.

8. A process as claimed in anyone of the preceding claims wherein an outer circle of concentrically arranged die cups are of one particular size and a inner circle concentrically arranged die cups are of another particular size and each circle of die cups configured to receive the same material.

9. A process as claimed in anyone of the preceding claims wherein the sealing element comprises mechanically operated counter rotating rollers or pneumatically operated sealing layers.

10. A method of purification of water comprising the steps of:
a) single cut opening of a sachet made by the process as claimed in claim 1
b) mixing of injected materials with water;
c) allowing the suspended particles to settle down;
d) separating the supernatant from the settled particles.
